# FASCICULE DE BREVET EUROPEEN

(11) **EP 2 585 739 B1**
(45) Date de publication et mention de la délivrance du brevet: **14.05.2014**
(21) Numéro de dépôt: 11735506.5
(22) Date de dépôt: 16.06.2011
(51) Int. Cl.: F16H 61/688

(54) **PROCEDE DE CHANGEMENT DE RAPPORT DE VITESSE MONTANT SOUS COUPLE AVEC DETECTION DES JEUX DE BOÎTE DE VITESSES**
VERFAHREN ZUR HOCHSCHALTUNG EINER GETRIEBEÜBERSETZUNG UNTER DREHMOMENT EINSCHLIESSLICH DES NACHWEISES VON GETRIEBEFLANKENSPIEL
METHOD FOR UPSHIFTING GEAR RATIO UNDER TORQUE, INCLUDING THE DETECTION OF GEARBOX BACKLASH

(30) Priorité: 23.06.2010 FR 1055009
(43) Date de publication de la demande: 01.05.2013
(73) Titulaire: Peugeot Citroën Automobiles SA, 78140 Vélizy Villacoublay (FR)
(72) Inventeur: DESCHAMPS, Alexandre, F-78530 Buc (FR); ROCQ, Gaëtan, F-78125 La Boissière-École (FR)
(74) Mandataire: Rosenberg, Muriel Sylvie
(86) Numéro de dépôt international: PCT/FR2011/051365
(87) Numéro de publication internationale: WO 2011/161358

(56) Documents cités:
- EP-A1- 1 262 684
- EP-A2- 2 067 680
- DE-A1- 10 308 692
- US-A1- 2005 072 256
- US-A1- 2006 258 506

## Description

L'invention concerne un procédé de changement de rapport montant sous couple avec détection des jeux de boîte de vitesses. L'invention trouve une application particulièrement avantageuse, mais non exclusive, dans le domaine des boîtes de vitesses de type DCT (« Dual Clutch Transmission » en anglais, pour transmission à double embrayage).

Ces boîtes de vitesses comportent de façon connue en soi deux arbres primaires concentriques ou indépendants associés chacun à un embrayage ou tout organe assurant la transmission du couple, ainsi que deux arbres secondaires en relation avec un différentiel de train de roues. Des paires de pignons formant les rapports de vitesses sont installées entre les arbres primaires et les arbres secondaires.

La spécificité de ce type de transmission est de pouvoir répartir la puissance délivrée par le moteur sur les deux arbres primaires indépendants, au moyen des deux embrayages. Les deux arbres primaires peuvent être simultanément engagés sur des rapports différents, afin de réaliser des changements de rapport sous couple, c'est-à-dire sans interruption de l'accélération du véhicule.

Le document US 2006/258506 A1 qui contient toutes les caractéristiques du préambule de la revendication 1 est considéré comme l'état de l'art le plus proche.

Dans la suite du document, on appelle arbre primaire « sortant » l'arbre primaire qui est engagé sur le rapport que l'on quitte (rapport sortant N). L'embrayage qui lui est associé est dit « embrayage sortant ». Et on appelle arbre primaire « entrant » l'arbre primaire qui est engagé sur le rapport à engager (le rapport entrant N+1). L'embrayage qui lui est associé est dit « embrayage entrant ».

Une des principales difficultés de pilotage d'un tel système est le contrôle des embrayages entrant et sortant pendant les changements de rapport (croisement des couples transmissibles des embrayages), en particulier avec des embrayages secs qui présentent une grande variabilité en fonctionnement.

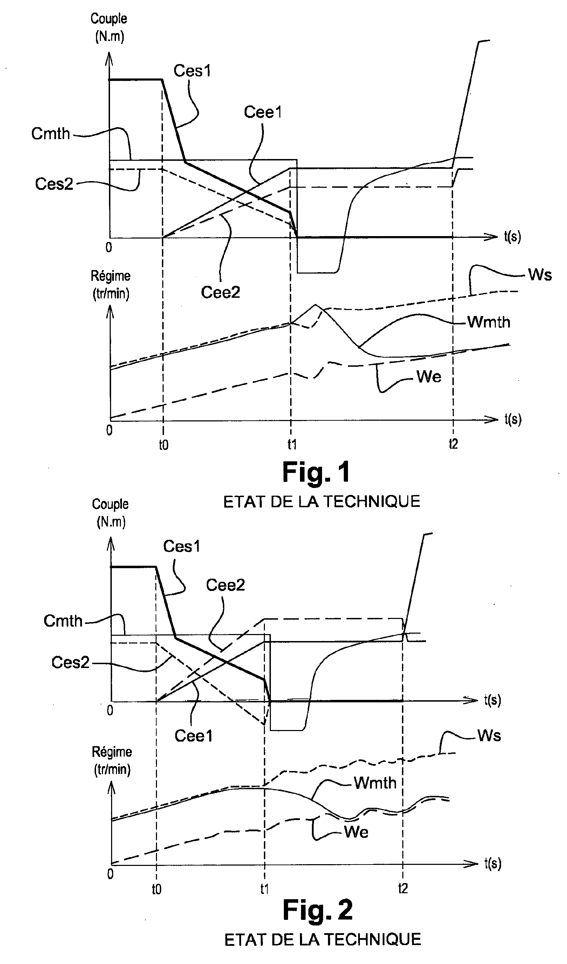

Les Figures 1 et 2 montrent des courbes de couples du moteur et des embrayages entrant et sortant, ainsi que les courbes de régime des arbres primaires et du moteur obtenues avec des procédés de changement de rapport montant sous couple classiques effectués respectivement sous un couple trop faible et trop fort, du fait de la mauvaise observabilité du couple transmissible de l'embrayage entrant.

Plus précisément, la courbe Cmth représente l'évolution du couple du moteur en fonction du temps. Les courbes Ces1 et Ces2 représentent respectivement le couple de consigne et le couple transmis de l'embrayage sortant en fonction du temps. Les courbes Cee1 et Cee2 représentent respectivement le couple de consigne et le couple transmis de l'embrayage entrant en fonction du temps.

La courbe Wmth représente l'évolution du régime du moteur thermique en fonction du temps ; tandis que les courbes Ws et We représentent les évolutions des régimes de l'arbre primaire sortant et de l'arbre primaire entrant en fonction du temps.

Sur la Figure 1 (pour un passage sous couple trop faible), à l'instant t0, un changement de rapport montant est commandé. Les couples de l'embrayage entrant Cee1, Cee2 et de l'embrayage sortant Ces1, Ces2 ont alors tendance respectivement à augmenter et à diminuer. A l'instant t1, alors que le couple transmis Cee2 de l'embrayage entrant est faible (sa valeur est très inférieure à la valeur de consigne Cee1), l'ouverture de l'embrayage sortant est commandée alors qu'il transmet encore un léger couple, ce qui a pour effet de créer des à-coups et de faire augmenter le régime moteur Wmth de manière importante. Il serait possible d'ouvrir plus progressivement l'embrayage sortant pour éviter les à-coups mais le régime moteur augmenterait tout de même, ainsi que l'énergie dissipée. Puis à l'instant t2, on commande l'embrayage entrant pour garantir la synchronisation du régime moteur sur le régime de l'arbre primaire entrant.

Comme montré sur la Figure 2 (pour un passage sous couple trop fort), à l'instant t0, un changement de rapport montant sous couple est commandé. Les couples de l'embrayage entrant et sortant ont alors tendance respectivement à augmenter et à diminuer. A l'instant t1, alors que le couple transmis Cee2 de l'embrayage entrant est élevé (sa valeur est très supérieure à la valeur de consigne Cee1), l'ouverture de l'embrayage sortant est commandée alors qu'il transmet un couple négatif, ce qui a pour effet de créer un choc à l'ouverture inconfortable pour le passager. L'ouverture de l'embrayage sortant pourrait être réalisée plus lentement pour éviter les à-coups, mais ceci dissiperait également plus d'énergie sans éviter la perte d'accélération du véhicule qui serait ressentie par le passager.

Il existe donc le besoin d'un procédé permettant d'optimiser l'énergie dissipée dans les embrayages et de limiter les ruptures de couples qui sont ressenties par les passagers du véhicule lors d'un changement de rapport montant sous couple.

L'invention permet de répondre à ce besoin en proposant un procédé dans lequel on détecte, lors du changement de rapport montant, que l'embrayage entrant transmet un couple suffisant dans le but de figer sa consigne de couple avant d'ouvrir complètement l'embrayage sortant. L'embrayage entrant transmet un couple suffisant à partir du moment où les jeux de la boîte de vitesses sont traversés.

Le moment où les jeux de la boîte de vitesses sont traversés correspond au moment où le couple transmis dans l'embrayage sortant commence à changer de signe, autrement dit à devenir négatif. La détection du changement de signe du couple transmis est réalisée en analysant les mesures des régimes des deux arbres primaires. Ainsi l'inversion de sens du couple dans l'embrayage sortant peut être calculée à partir de capteurs de mesure de régime déjà existants dans les architectures DCT traditionnelles.

Les avantages de l'invention sont les suivants :
- un gain en confort pour le conducteur puisqu'il se produit une fermeture de l'embrayage au niveau juste nécessaire afin d'obtenir le meilleur profil possible de couple aux roues lors des passages montants.
- une optimisation du temps de réaction entre la décision de changement de rapport (par exemple avec une action sur le levier de vitesse) et le résultat perceptible (baisse du régime moteur).
- une optimisation de l'énergie dissipée dans les embrayages (pour une prestation donnée de changement de rapport), par le maintien le plus court possible du point de fonctionnement à la puissance dissipée maximale.
- un gain en robustesse aux dispersions de fabrication, de fonctionnement et de vieillissement du système. De plus, le jeu de boîte de vitesses ne peut qu'augmenter au cours de la vie du véhicule, et donc devenir encore plus facilement détectable.
- un gain en temps de calibration et de mise au point du système, pour les passages montants.
- une diminution de la dépendance des stratégies de contrôle vis-à-vis des fonctions d'estimation de cartographies d'embrayages (auto-adaptation traditionnellement difficile à mettre au point).

L'invention concerne donc un procédé de changement de rapport montant sous couple sur une boîte de vitesses du type comportant :
- un premier et un deuxième arbres primaires associés chacun à un organe de transmission du couple en relation avec un moteur,
- un premier et un deuxième arbres secondaires, et
- des paires de pignons formant les rapports de vitesses installées entre les arbres primaires et les arbres secondaires, des manchons de crabotage étant associés aux rapports de vitesse,
- dans lequel, pour passer d'un rapport quitté N, dit rapport « sortant » à un nouveau rapport N+1 dit rapport « entrant »,
- l'arbre primaire dit « sortant » étant engagé sur le rapport sortant N via le manchon de crabotage correspondant,
- l'arbre primaire dit « entrant » étant engagé sur le rapport entrant N+1 via le manchon de crabotage correspondant,
- le procédé comporte les étapes suivantes :
- commander l'organe sortant et l'organe entrant respectivement de manière que le couple transmis par l'organe sortant diminue et que le couple transmis par l'organe entrant augmente,
- ouvrir complètement l'organe sortant,
- l'étape d'ouvrir l'organe sortant étant effectuée sensiblement au moment où l'on détecte que le couple transmis par l'organe sortant change de signe,
- l'étape de détecter le changement de signe du couple transmis par l'organe sortant étant effectuée à partir d'une analyse des régimes de l'arbre primaire entrant et de l'arbre primaire sortant,
- figer la consigne de couple de l'organe entrant, et
- commander l'organe entrant pour garantir la synchronisation du régime moteur avec le régime arbre primaire entrant,
caractérisé en ce que le procédé comporte en outre les étapes suivantes :
- mesurer la vitesse de l'arbre primaire entrant et la vitesse de l'arbre primaire sortant,
- calculer une différence entre ces vitesses,
- appliquer cette différence en entrée d'un intégrateur afin d'obtenir un angle de jeu estimé,
- comparer cet angle de jeu estimé avec un seuil de détection qui est fonction des rapports sortant N et entrant N+1,
- déterminer si le couple transmis par l'organe sortant est négatif ou non en fonction du résultat de cette comparaison.

Selon une mise en oeuvre, il comporte l'étape d'initialiser l'intégrateur lorsque la consigne de couple de l'organe entrant atteint la moitié de sa valeur cible liée au couple moteur.

Selon une mise en oeuvre, avant de calculer la valeur de différence entre les vitesses de l'arbre primaire entrant et de l'arbre primaire sortant, la mesure de vitesse de l'arbre primaire entrant est multipliée par le saut de démultiplication entre le rapport entrant N+1 et le rapport sortant N.

Selon une mise en oeuvre, le procédé comporte l'étape de filtrer l'angle de jeu estimé avant de comparer cet angle de jeu estimé avec le seuil de détection.

L'invention sera mieux comprise à la lecture de la description qui suit et à l'examen des figures qui l'accompagnent. Ces figures ne sont données qu'à titre illustratif mais nullement limitatif de l'invention. Elles montrent :
Figures 1 et 2 (déjà décrites) : des courbes montrant l'évolution des couples moteur et d'embrayage, du régime du moteur et des arbres primaires en fonction du temps obtenues avec des procédés de changement de rapport montant sous couple classiques ;
Figure 3 : une représentation schématique d'une boîte de vitesses de type DCT mettant en oeuvre le procédé selon l'invention ;
Figure 4 : des courbes montrant l'évolution des couples moteur et d'embrayage, du régime du moteur et des arbres primaires en fonction du temps obtenues avec le procédé de changement de rapport montant sous couple selon l'invention ;
Figure 5 : un schéma fonctionnel du système permettant de détecter le changement de signe du couple transmis par l'embrayage sortant.

Les éléments identiques, similaires ou analogues conservent la même référence d'une figure à l'autre.

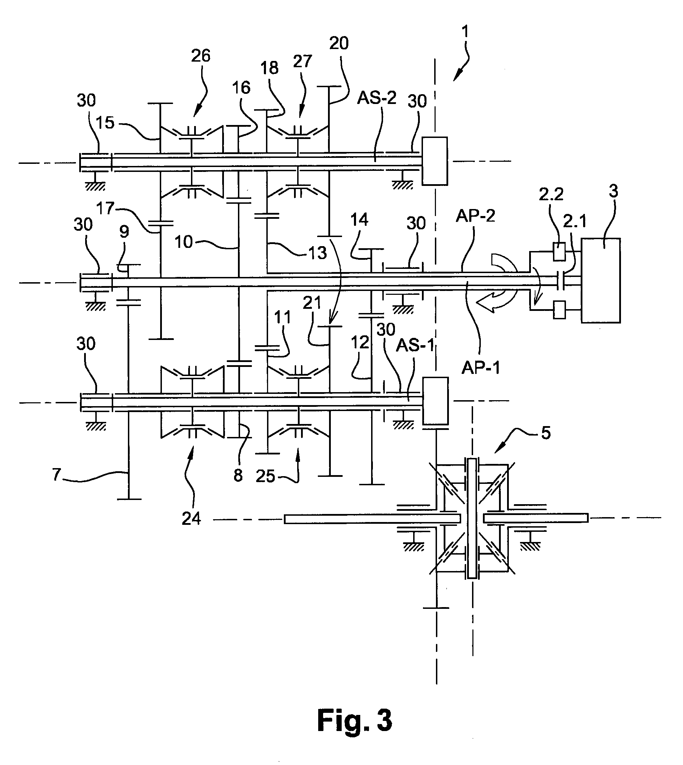

La Figure 3 montre un exemple de boîte de vitesses 1 de type DCT comportant un premier AP1 et un deuxième AP2 arbres primaires associés chacun à un embrayage 2.1, 2.2 en relation avec le moteur thermique 3. Les arbres primaires AP1 et AP2 sont concentriques. La boîte de vitesses 1 comporte également deux arbres secondaires AS1, AS2 connectés à un différentiel 5 lui-même relié aux roues du véhicule (non représentées).

Des paires de pignons formant les rapports de vitesses sont installées entre les arbres primaires AP1, AP2 et les arbres secondaires AS1, AS2. Ces paires de pignons sont formées par un pignon fou monté sur un des arbres secondaires AS1, AS2 et un pignon lié en rotation avec un des arbres primaires AP1, AP2.

Plus précisément, les pignons 7, 8 montés fous sur l'arbre secondaire AS1 engrenant respectivement avec les pignons 9 et 10 liés en rotation avec l'arbre primaire AP1 forment les rapports de première et de septième.

Les pignons 11, 12 montés fous sur l'arbre secondaire AS1 engrenant respectivement avec les pignons 13 et 14 liés en rotation avec l'arbre primaire AP2 forment les rapports de sixième et de seconde.

Les pignons 15, 16 montés fous sur l'arbre secondaire AS2 engrenant respectivement avec les pignons 17 et 10 liés en rotation avec l'arbre primaire AP1 forment les rapports de troisième et de cinquième.

Le pignon 18 monté fou sur l'arbre secondaire AS2 engrenant avec le pignon 13 lié en rotation avec l'arbre primaire AP2 forme le rapport de quatrième. Le rapport de marche arrière est formé par les pignons fous 20 et 21 montés respectivement sur les arbres secondaires AS2 et AS1.

En variante, un rapport de vitesse est formé par un pignon fou installé sur un des arbres primaires et un pignon lié en rotation avec un des arbres secondaires.

La boîte de vitesses comporte également des manchons de crabotage 24-27 associés chacun à deux rapports de vitesse. Plus précisément, le manchon 24 est installé entre le rapport de première et de septième. Le manchon 25 est installé entre le rapport de seconde et de sixième. Le manchon 26 est installé entre le rapport de troisième et de cinquième. Le manchon 27 est installé entre le rapport de quatrième et la marche arrière.

Les roulements permettant la rotation des arbres primaires AP1, AP2, des arbres secondaires AS1-AS2 sont référencés 30 sur la Figure 3.

Lors d'un changement de rapport montant, on appelle arbre primaire « sortant », l'arbre primaire AP1, AP2 qui est engagé sur le rapport que l'on quitte (rapport sortant N) via le manchon de crabotage correspondant. L'embrayage 2.1, 2.2 qui lui est associé est dit « embrayage sortant ». Et on appelle arbre primaire « entrant », l'arbre primaire AP1, AP2 qui est engagé sur le rapport à engager (le rapport entrant N+1) via le manchon de crabotage correspondant. L'embrayage 2.1, 2.2 qui lui est associé est dit « embrayage entrant ».

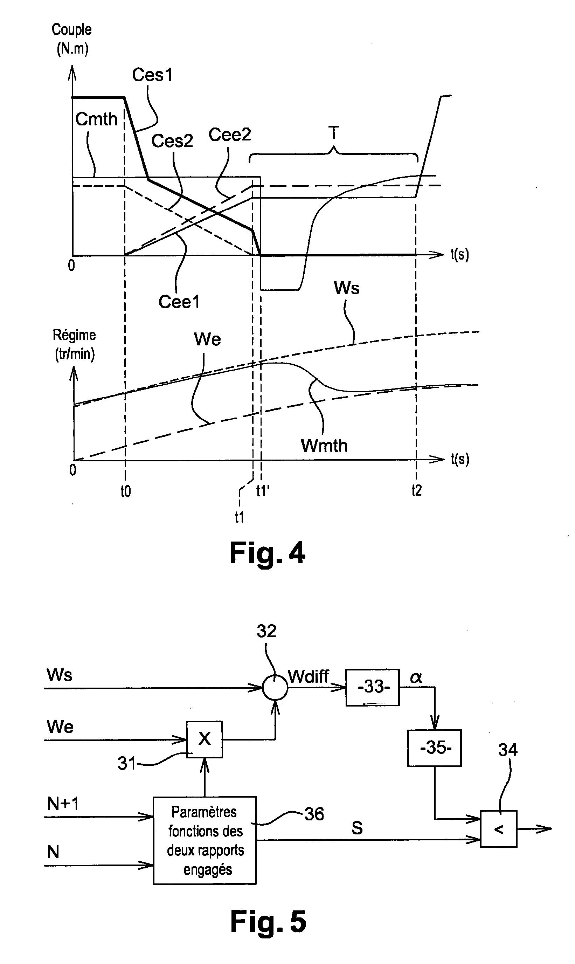

En référence avec la Figure 4, on décrit les différentes courbes de couple moteur et d'embrayage et de régime du moteur et des arbres primaires obtenues lors de la mise en oeuvre du procédé de changement de rapport sous couple selon l'invention.

La courbe Cmth représente l'évolution du couple du moteur en fonction du temps. Les courbes Ces1 et Ces2 représentent respectivement le couple de consigne et le couple transmis de l'embrayage sortant 2.1, 2.2 en fonction du temps. Les courbes Cee1 et Cee2 représentent respectivement le couple de consigne et le couple transmis de l'embrayage entrant 2.1, 2.2 en fonction du temps.

La courbe Wmth représente l'évolution du régime du moteur thermique en fonction du temps ; tandis que les courbes Ws et We représentent les évolutions des régimes de l'arbre primaire sortant AP1, AP2 et de l'arbre primaire entrant AP1, AP2 en fonction du temps.

Plus précisément, à l'instant t0, alors que le couple Ces1, Ces2 de l'embrayage sortant est non nul et que le couple Cee1, Cee2 de l'embrayage entrant est nul, un changement de rapport montant sous couple est commandé. Les couples de l'embrayage entrant Cee1, Cee2 et de l'embrayage sortant Ces1, Ces2 ont alors tendance respectivement à augmenter et à diminuer de manière que ces courbes se croisent entre les instants t0 et t1.

A l'instant t1 dès que l'on détecte que le couple transmis Ces2 de l'embrayage sortant change de signe, l'ouverture complète de cet embrayage sortant est commandée. La consigne de couple Cee1 de l'embrayage entrant est alors figée entre les instants t1 et t2 sur la période T. A l'instant t1', on coupe l'injection du moteur 3, ce qui a tendance à faire chuter le couple moteur Cmth. A l'instant t2, le couple moteur ayant ré-augmenté, on peut synchroniser le régime moteur sur le régime de l'arbre entrant. Ainsi il n'y a aucune rupture de couple lors de l'ouverture de l'embrayage sortant.

On s'aperçoit en outre que le régime du moteur Wmth passe du régime de l'arbre primaire sortant Ws au régime de l'arbre primaire entrant We de manière progressive sans envolée de régime, ce qui participe également au confort auditif des passagers du véhicule.

La Figure 5 montre une représentation fonctionnelle du système permettant de détecter le changement de signe du couple Ces2 transmis par l'embrayage sortant 2.1, 2.2. Les valeurs d'entrée utilisées sont le régime Ws de l'arbre primaire sortant et le régime We de l'arbre primaire entrant. Ces régimes Ws, We sont mesurés à l'aide de capteurs classiquement utilisés sur les boîtes de type DCT.

Le régime We d'entrée ayant été préalablement multiplié à l'aide d'un module 31 par le saut de démultiplication entre le rapport entrant N+1 et le rapport sortant N, le soustracteur 32 calcule une valeur de différence Wdiff entre les vitesses We et Ws.

Le module intégrateur 33 intègre cette valeur de différence Wdiff de manière à obtenir un angle α de jeu estimé. De préférence, ce module intégrateur 33 est initialisé au cours du croisement des couples Cee1, Cee2, Ces1, Ces2 des embrayages 2.1, 2.2 entrant et sortant. En particulier, le module intégrateur 33 est initialisé lorsque la consigne de couple (Cee2) de l'organe entrant atteint la moitié de sa valeur cible liée au couple moteur.

Cet angle de jeu α est ensuite comparé, à l'aide d'un module comparateur 34, avec un seuil S de détection. Ce seuil S de détection est calculé à l'aide du module 36 à partir des paramètres des rapports entrant N+1 et sortant N engagés. Ce seuil S de détection sera calibré sensiblement à la moitié du jeu angulaire total obtenu sur l'arbre primaire du rapport N lorsque l'arbre primaire du rapport N+1 est bloqué en rotation. Le résultat de cette comparaison permet de déterminer si le couple Ces2 transmis par l'embrayage sortant a changé de signe ou non. Si besoin, l'angle de jeu α pourra être filtré par le module 35 avant d'être appliqué en entrée du module comparateur 34. En variante, le module 35 pourrait être positionné en entrée du module 33.

## Revendications

1. Procédé de changement de rapport montant sous couple sur une boîte (1) de vitesses du type comportant :
- un premier et un deuxième arbres primaires (AP1, AP2) associés chacun à un organe de transmission du couple (2.1, 2.2) en relation avec un moteur (3),
- un premier et un deuxième arbres secondaires (AS1, AS2), et
- des paires de pignons (7-18) formant les rapports de vitesses installées entre les arbres primaires (AP1, AP2) et les arbres secondaires (AS1, AS2), des manchons de crabotage étant associés aux rapports de vitesse,
- dans lequel, pour passer d'un rapport quitté N, dit rapport « sortant » à un nouveau rapport N+1 dit rapport « entrant »,
- l'arbre primaire (AP1, AP2) dit «sortant», associé à l'organe de transmission (2.1, 2.2) dit « sortant », est engagé sur le rapport sortant N via le manchon de crabotage correspondant,
- l'arbre primaire (AP1, AP2) dit «entrant», associé à l'organe de transmission (2.1, 2.2) dit « entrant », est engagé sur le rapport entrant N+1 via le manchon de crabotage correspondant,
le procédé comportant les étapes suivantes :
- commander l'organe sortant (2.1, 2.2) et l'organe entrant (2.1, 2.2) respectivement de manière que le couple transmis par l'organe sortant diminue et que le couple transmis par l'organe entrant augmente,
- ouvrir complètement l'organe sortant (2.1, 2.2) au moment où l'on détecte que le couple (Ces2) transmis par l'organe sortant (2.1, 2.2) change de signe à partir d'une analyse des régimes (We, Ws) de l'arbre primaire entrant et de l'arbre primaire sortant ,
- figer la consigne de couple (Cee1) de l'organe entrant (2.1, 2.2), et
- commander l'organe entrant (2.1, 2.2) pour garantir la synchronisation du régime moteur avec le régime arbre primaire entrant,
**caractérisé en ce que** le procédé comporte en outre les étapes suivantes :
- mesurer la vitesse (We) de l'arbre primaire entrant et la vitesse (Ws) de l'arbre primaire sortant,
- calculer une différence (Wdiff) entre ces vitesses,
- appliquer cette différence (Wdiff) en entrée d'un intégrateur (33) afin d'obtenir un angle (α) de jeu estimé,
- comparer cet angle (α) de jeu estimé avec un seuil (S) de détection qui est fonction des rapports sortant N et entrant N+1,
- déterminer si le couple (Ces2) transmis par l'organe sortant est négatif ou non en fonction du résultat de cette comparaison.

2. Procédé selon la revendication 1, **caractérisé en ce qu'**il comporte l'étape d'initialiser l'intégrateur (33) lorsque la consigne de couple (Cee2) de l'organe entrant atteint la moitié de sa valeur cible liée au couple moteur.

3. Procédé selon la revendication 1 ou 2, **caractérisé en ce que**, avant de calculer la valeur de différence entre les vitesses (We, Ws) de l'arbre primaire entrant et de l'arbre primaire sortant, la mesure de vitesse (We) de l'arbre primaire entrant est multipliée par le saut de démultiplication entre le rapport entrant N+1 et le rapport sortant N.

4. Procédé selon l'une des revendications 1 à 3, **caractérisé en ce qu'**il comporte l'étape de filtrer l'angle (α) de jeu estimé avant de comparer cet angle de jeu estimé avec le seuil (S) de détection.

## Patentansprüche

1. Verfahren zur Hochschaltung eines Übersetzungsverhältnisses unter Drehmoment auf einem Schaltgetriebe (1) des Typs, der Folgendes aufweist:
- eine erste und eine zweite Hauptwelle (AP1, AP2), die jeweils zu einem Drehmoment-Übertragungselement (2.1, 2.2) gehören, das mit einem Motor (3) verbunden ist,
- eine erste und eine zweite Hilfswelle (AS1, AS2) und
- Ritzelpaare (7 bis 18), die die Übersetzungsverhältnisse bilden, die zwischen den Hauptwellen (AP1, AP2) und den Hilfswellen (AS1, AS2) installiert sind, wobei Klauenkupplungsmuffen mit den Übersetzungsverhältnissen verbunden sind,
- wobei, um zum Schalten von einem verlassenen Übersetzungsverhältnis N, "ausrückendes Übersetzungsverhältnis" genannt, zu einem neuen Übersetzungsverhältnis N+1, "einrückendes Übersetzungsverhältnis" genannt,
• die "ausrückend" genannte Hauptwelle (AP1, AP2), die mit dem Übertragungselement (2.1, 2.2), ausrückendes Übertragungselement genannt, verbunden ist, auf dem ausrückenden Übersetzungsverhältnis N über die entsprechende Klauenkupplungsmuffe eingerückt wird,
• die "einrückend" genannte Hauptwelle (AP1, AP2), die mit dem Übertragungselement (2.1, 2.2), "einrückend" genannt, verbunden ist, auf dem einrückenden Übersetzungsverhältnis N+1 über die entsprechende Klauenkupplungsmuffe eingerückt wird,
wobei das Verfahren die folgenden Schritte aufweist:
- Steuern des ausrückenden Übertragungselements (2.1, 2.2) und des einrückenden Übertragungselements (2.1, 2.2) jeweils derart, dass das von dem ausrückenden Übertragungselement übertragene Drehmoment sinkt und das von dem einrückenden Übertragungselement übertragene Drehmoment zunimmt,
- komplettes Öffnen des ausrückenden Übertragungselements (2.1, 2.2) in dem Augenblick, in dem man erfasst, dass das Drehmoment (Ces2), das von dem ausrückenden Übertragungselement (2.1, 2.2) übertragen wird, das Vorzeichen wechselt, ausgehend von einer Analyse der Drehzahlen (We, Ws) der einrückenden Hauptwelle und der ausrückenden Hauptwelle,
- Einfrieren des Drehmomentsollwerts (Cee1) des ausrückenden Übertragungselements (2.1, 2.2) und
- Steuern des einrückenden Übertragungselements (2.1, 2.2), um die Synchronisation der Motordrehzahl mit der Drehzahl der einrückenden Hauptwelle zu garantieren,
**dadurch gekennzeichnet, dass** das Verfahren ferner die folgenden Schritte aufweist:
- Messen der Drehzahl (We) der einrückenden Hauptwelle und der Drehzahl (Ws) der ausrückenden Hauptwelle,
- Berechnen eines Unterschieds (Wdiff) zwischen diesen Drehzahlen,
- Anlegen dieses Unterschieds (Wdiff) am Eingang eines Integrators (33), um einen geschätzten Spielwinkel (α) zu erzielen,
- Vergleichen dieses geschätzten Spielwinkels (α) mit einem Erfassungsschwellenwert (S), der von dem ausrückenden Übersetzungsverhältnis N und dem einrückenden Übersetzungsverhältnis N+1 abhängt,
- Bestimmen, ob das von dem ausrückenden Übertragungselement übertragene Drehmoment (Ces2) in Abhängigkeit von dem Resultat dieses Vergleichs negativ ist oder nicht.

2. Verfahren nach Anspruch 1, **dadurch gekennzeichnet, dass** es den Schritt des Initialisierens des Integrators (33) aufweist, wenn der Drehmomentsollwert (Cee2) des einrückenden Übertragungselements die Hälfte seines mit dem Motordrehmoment verbundenen Zielwerts erreicht.

3. Verfahren nach Anspruch 1 oder 2, **dadurch gekennzeichnet, dass**, vor dem Berechnen des Unterschiedswerts zwischen den Drehzahlen (We, Ws) der einrückenden Hauptwelle und der ausrückenden Hauptwelle die Drehzahlmessung (We) der einrückenden Hauptwelle mit dem Untersetzungssprung zwischen dem einrückenden Übersetzungsverhältnis N+1 und dem ausrückenden Übersetzungsverhältnis N multipliziert wird.

4. Verfahren nach einem der Ansprüche 1 bis 3, **dadurch gekennzeichnet, dass** es den Schritt des Filterns des geschätzten Spielwinkels (α) vor dem Vergleichen dieses geschätzten Spielwinkels mit dem Erfassungsschwellenwert (S) aufweist.

## Claims

1. A method for upshifting gear ratio under torque on a gearbox (1) of the type comprising:
- a first and a second primary shaft (AP1, AP2) each associated with a torque transmission member (2.1, 2.2) in relation with an engine (3),
- a first and a second secondary shaft (AS1, AS2), and
- pairs of gears (7-18) forming the gear ratios installed between the primary shafts (AP1, AP2) and the secondary shafts (AS1, AS2), dog clutch sleeves being associated with the gear ratios,
- in which, to pass from a ratio N which has been exited, designated "output" ratio, to a new ratio N+1, designated "input" ratio,
- the primary shaft (AP1; AP2), designated "output" shaft, associated with the transmission member (2.1, 2.2), designated "output" transmission member, is engaged on the output ratio N via the corresponding dog clutch sleeve,
- the primary shaft (AP1; AP2) designated "input" shaft, associated with the transmission member (2.1, 2.2), designated "input" transmission member, is engaged on the input ratio N+1 via the corresponding dog clutch sleeve,
the method comprising the following steps:
- controlling the output member (2.1, 2.2) and the input member (2.1, 2.2) respectively such that the torque transmitted by the output member decreases and the torque transmitted by the input member increases,
- completely opening the output member (2.1, 2.2) at the moment at which it is detected that the torque (Ces2) transmitted by the output member (2.1, 2.2) changes sign from an analysis of the speeds (We, Ws) of the primary input shaft and of the primary output shaft,
- freezing the torque setpoint (Cee1) of the input member (2.1, 2.2), and
- controlling the input member (2.1, 2.2) to guarantee the synchronization of the engine speed with the primary input shaft speed,
**characterized in that** the method further comprises the following steps:
- measuring the speed (We) of the primary input shaft and the speed (Ws) of the primary output shaft,
- calculating a difference (Wdiff) between these speeds,
- applying this difference (Wdiff) at the input of an integrator (33) so as to obtain an estimated clearance angle (α),
- comparing this estimated clearance angle (α) with a detection threshold (S) which is a function of the output N and input N+1 ratios,
- determining whether or not the torque (Ces2) transmitted by the output member is negative as a function of the result of this comparison.

2. The method according to Claim 1, **characterized in that** it comprises the step of initializing the integrator (33) when the torque setpoint (Cee2) of the input member reaches half of its target value linked to the engine torque.

3. The method according to Claim 1 or 2, **characterized in that** before calculating the difference value between the speeds (We, Ws) of the main input shaft and of the main output shaft, the speed measurement (We) of the primary input shaft is multiplied by the reduction jump between the input ratio N+1 and the output ratio N.

4. The method according to one of Claims 1 to 3, **characterized in that** it comprises the step of filtering the estimated clearance angle (α) before comparing this estimated clearance angle (α) with the detection threshold (S).
